# EUROPEAN PATENT APPLICATION

(11) **EP 3 100 990 A1**
(43) Date of publication of application: **07.12.2016**
(21) Application number: 15305862.3
(22) Date of filing: 05.06.2015
(51) Int. Cl.: C04B 28/06

(54) **BINDER COMPOSITION AND MORTAR COMPOSITION, ESPECIALLY SELF-LEVELLING MORTAR COMPOSITION, HAVING IMPROVED POLISHING RESISTANCE**

(71) Applicant: Kerneos, 92800 Puteaux (FR)
(72) Inventor: The designation of the inventor has not yet been filed
(74) Representative: Jacobacci Coralis Harle

(57) **Abstract**

The invention relates to a binder composition comprising at least (a) one calcium aluminate cement, said calcium aluminate cement comprising by weight relative to its total weight,
- as regards its chemical composition at least : 50% or less of Al₂O₃ and,
- as regards its mineralogical composition at least: 50% or more of CA phase,
said calcium aluminate cement comprising a Blaine Specific Area (BSA) higher than or equal to 3800 cm²/g.

The invention also relates to a mortar composition, especially a self-levelling and/or self-smoothing mortar comprising the above mentioned binder composition and having improved polishing resistance.

## Description

### TECHNICAL FIELD OF THE INVENTION

The invention relates to the field of mortar, and especially to the field of self-levelling mortar.

In particular, the invention refers to a binder composition, especially a hydraulic binder for preparing a mortar, such as self-levelling mortar comprising at least a specific calcium aluminate cement.

The invention also refers to mortar composition comprising said binder composition and granulates to perform floor covering having improved polish or wear resistance.

### BACKGROUND INFORMATION AND PRIOR ART

The traditional techniques for constructing screeds and slabs using hydraulic binders based on cements, aggregates and water, are well known. The pastes thus obtained, of variable consistency, are generally applied to rough substrates and take several hours to set, after hydration of the cement, and produce flat, smooth surfaces at the cost of numerous difficult secondary operations carried out after the paste has been spread. It is well known that such pastes are normally relatively firm and even plastic, and the handling of these pastes, whether mixing, transport, spreading or smoothing, can be partially mechanized or entirely manual, in accordance with techniques perfectly known to the skilled person.

It is also known that the mechanical characteristics of structures obtained using such binders, even if they correspond to standards in force, lack reliability in the long term, and it is very commonly observed that many structures suffer major damage during the ten-year guarantee period, notably due to the considerable hydraulic shrinkage and the low mechanical strengths resulting from these traditional mixes. It will also be noted that, because of these technical problems, it is often necessary, in order to meet floor covering requirements, to cover screeds or slabs with smoothing coats or Self-Leveling Underlayment (SLU), in order to obtain satisfactory evenness.

Especially, smoothing coats and SLU are special mortars which flow very well so that they can level rough concrete slab surfaces, while improving the surface aspect and resistance to abrasion of these surfaces. In general, these smoothing coats and SLU are intended to be covered by soft floors such as carpets, resilient flooring PVC); wood floor; or tiling, etc.

Especially, a quick reoperation for surfaces or structures requires reaching, depending on the applications, a minimum mechanical strength level at a given time and/or a coating time defined by the residual moisture in the material.

According to the specification of the Centre Scientifique et Technique du Bâtiment ("Produits et systèmes de preparation de sols intérieurs pour la pose de revêtements de sols minces" guide technique pour l'avis technique et le classement P.Cahiers du CSTB, n°2893 - Delivery n° 370, June 1996), SLU products should meet at the same time mechanical performance criteria (paste homogeneity, fluidity (spreading diameter of the paste being previously poured into a ring with 30 nm height and 50 mm diameter) and gelling time.

Numerous proposals can be found in technical literature for producing in a binder composition or mortar, qualities of self-smoothing and/or self-levelling and indeed for improving mechanical resistance after the said mortar sets.

This is notably the case of international application WO-89/01916 which recommends fabrication of a self-levelling mortar screed which contains binder, aggregate, polypropylene fibers and possibly admixtures used in self-levelling slurry screeds, as well as water, wherein the amount of polypropylene fibers is 0.05-3 % by weight, calculated from the dry ingredients.

However, the applicant notes that the difficulty in respect of these compounds resides in mastering shrinkage at the time of drying when a mortar is spread over considerable continuous lengths.

In practice, formulations for self-levelling mortar with quick hardening and drying may comprise by weight: 40% of a hydraulic binder (calcium aluminate, calcium sulfate, Portland cement and additives) and 60% of aggregates (sands and fillers). For instance, a known binder formulation may comprise, by weight, relative to the total weight of the formulation about: 60% of Portland cement; 20% of aluminate cement, other hydraulic binder (lime, anhydrite, etc.) and additives.

These additives may be for instance redispersible powder or liquid polymers. Indeed, for improving the wear or abrasion resistance of SLU, it is known from the prior art to introduce redispersible powder or liquid polymers in an amount ranging from 2 to 5%, by weight, relative the total weight of the SLU mortar. Such polymers are for example polyvinyl alcohols, polyamides, latexes in a liquid form or in a powdered form.

However, these polymers are quite expensive.

That is why, in some markets, the redispersible powder or liquid polymers may be used in the SLU in a lower amount, such as 1% by weight or less relative to the total weight of the SLU. However, while this kind of formulation reduces the cost significantly, it also makes the surface less resistance to polishing, which may be problematic if the surface is then mechanically polished after the set of the SLU. This polishing operation may be indeed used so as to increase the smoothness of the surface. Once this operation is done and the dust resulting from the polishing has been removed, the overlayment (such as PVC) can be glued directly on this SLU mortar.

Therefore, there is still a need in the prior art to provide a novel binder composition and a novel self-levelling mortar having good mechanical properties, which is easy to produce, while being preferably not expensive.

Therefore, an object of the current invention is to provide a new composition for self-leveling mortar avoiding, at least in part, the above cited disadvantages. Especially, an object of the invention is to provide a novel binder composition for the preparation of self-levelling and/or self-smoothing mortar which enables to improve the polishing properties of the mortar without cost increase.

### SUMMARY OF THE INVENTION

Therefore, one object of the invention is to provide a binder composition, especially a hydraulic binder composition, comprising at least (a) one calcium aluminate cement, said calcium aluminate cement comprising, by weight, relative to its total weight, and
- as regards its chemical composition at least: 50% or less of Al₂O₃ and,
- as regards its mineralogical composition at least: 50% or more of CA phase;
said calcium aluminate cement comprising a Blaine Specific Area (BSA) higher than or equal to 3800 cm²/g.

Another object of the present invention is principally a self-levelling mortar comprising granulates and the above mentioned binder composition, which is able to provide to the mortar self-levelling and self-smoothing properties, while having good mechanical properties.

According to the invention, self-levelling means the characteristic whereby mortar spread over a rough surface settles on its own to a horizontal level, without the intervention of any professional or any specific tool. Similarly, self-smoothing means the characteristic whereby the spread over a rough surface takes on, on its own, a smooth or even surface, without the intervention of any professional or specific tool, except in the case of a special finish, for example to achieve a glazed surface.

According to the invention, all weight percentages, unless otherwise specified, are expressed as related to the weight of dry matter in the binder or mortar composition.

### DETAILED DESCRIPTION OF THE INVENTION

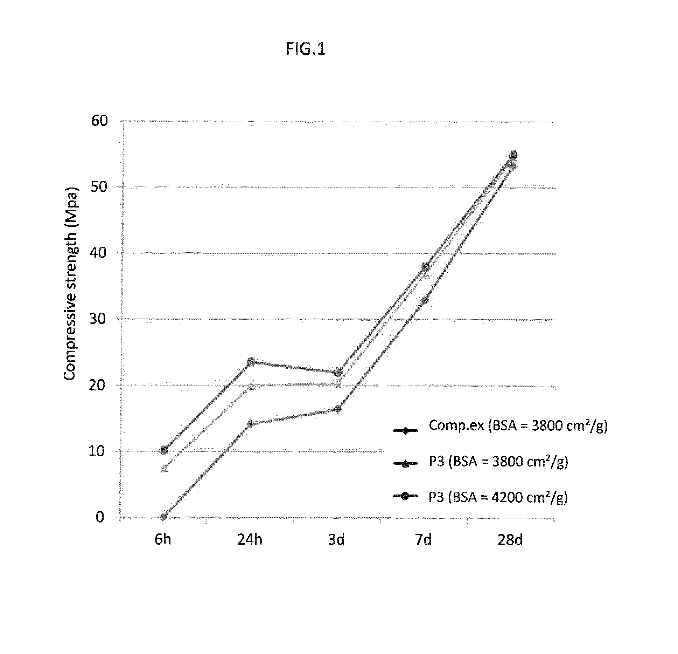

The rest of the description does refer to the appended Figure which shows on FIG. 1, a diagram showing the compressive strength (MPa) as a function of time ("h" hour or "d" day) of two mortar (P3) compositions according to one embodiment of the invention and one as comparative example (Comp.ex.).

Surprisingly, it has been shown according to the invention that using a calcium aluminate cement in the binder composition of the invention, which comprises a particular chemical composition and a particular mineralogical composition with a higher fineness, enables to obtain a composition for self-levelling and/or self-smoothing mortar having improved polish resistance, especially even if this composition contains few redispersible polymers, and this without affecting the other properties and without increasing the manufacture costs.

The invention thus relates to a binder composition, especially a hydraulic binder composition comprising at least (a) one calcium aluminate cement, said calcium aluminate cement comprising, by weight, relative to its total weight, and
- as regards its chemical composition at least: 50% or less of Al₂O₃ and,
- as regards its mineralogical composition at least: 50% or more of CA phase,
said calcium aluminate cement comprising a Blaine Specific Area (BSA) higher than or equal to 3800 cm²/g, preferably higher than or equal to 3900 cm²/g.

Preferably, said calcium aluminate cement (a) comprises, by weight, relative to its total weight, and as regards its, mineralogical composition 15% or less, especially 11% or less, ideally 6% or less of CA2 phase.

In general, said calcium aluminate cement (a) comprises a Blaine specific area (BSA) which is ranging from 3800 to 6000, preferably ranging from 4000 to 6000 cm²/g, and especially ranging from 4200 to 5000 cm²/g.

Thus, the Applicant has indeed surprisingly discovered that by increasing the Blaine specific area (higher than or equal to 3800 cm²/g) and by increasing the CA content and preferably lowering the CA2 content of the calcium aluminate cement, the binder composition of the invention is able to form a mortar composition, especially a SLU mortar, having improved surface hardness (regarding polishing) without affecting its other properties (flows, setting time, strength development, shrinkage or expansion under water, smooth surface...).

In addition, the binder composition of the invention has the advantages to be easy to handle, and therefore to avoid complicating the preparation process of the mortar, and also to be inexpensive in comparison with binder composition comprising the above mentioned redispersible powder or liquid polymers.

Another advantage of the invention is to allow for a reoperation of structures, while keeping a workability equivalent to that obtained with prior art mortars.

In particular, said calcium aluminate cement (a) of the binder composition of the invention comprises, by weight, relative to its total weight and as regards its chemical composition:
- from 30% to 50%, preferably from 40% to 50%, ideally from 42% to 50% of Al₂O₃;
- from 30% to 45%, preferably from 35% to 40% of CaO;
- from 20% or less, preferably from 15% of less of SiO₂, Fe₂O₃, TiO₂ or mixtures thereof.

In the sense of the invention, a value from 30% to 50% of Al₂O₃ includes the followings values: 30%, 31%, 32%, 33%, 34%, 35%, 36%, 37%, 38%, 39%, 40%, 41%, 42%, 43%, 44%, 45%, 46%, 47%, 48%, 49%, or 50%.

Optionally, said calcium aluminate cement (a) may comprise traces of other mineral oxides, such as MgO, SO₃, K₂O, Na₂O, P₂O₅ or mixture thereof and/or also traces of other elements, such as Ba, Cr, Mn, etc.

Especially, said calcium aluminate cement (a) comprises, by weight, relative to its total weight and as regards to its mineralogical composition, at least:
- from 50% to 70%, preferably from 50% to 60%, typically from 50% to 55% of CA phase;
- from 0% to 15%, preferably from 0 to 11%, and in particular from 0.8% to 7% of CA2 phase.

In the sense of the invention, a value from 50% to 70% of CA phase includes the followings values: 50%, 51%, 52%, 53%, 54%, 55%, 56%, 57%, 58%, 59%, 60%, 61%, 62%, 63%, 64%, 65%, 66%, 67%, 68%, 69% and 70%.

Preferably, said calcium aluminate cement (a) further comprises, by weight, relative to its total weight and as regards its mineralogical composition, at least: from 25% to 40%, especially from 30% to 35% of C2AS phase.

The calcium aluminate cement (a) may also comprise, as traces (≤6% by weight relative to the total weight of the calcium aluminate cement), other phases, such as C12A7, C4A3$, C3A, a, b-C2S, perovskite, C2A(1-x)Fx, C2S, C2AS, C3S where F and S respectively stand for Fe2O3 and SiO2 according to the cement nomenclature, and where x is an integer belonging to ]0; 1], or mixtures thereof.

For instance, the calcium aluminate cement (a) further comprises, by weight, relative to its total weight and as regards its mineralogical composition, at least: from 2% to 6%, preferably from 3% to 5.5% of perovskite.

The calcium aluminate cement included in the binder composition of the invention could be obtained generally through baking aluminum oxide A rich materials, including bauxites, alumina, and calcium oxide C (chalk, lime, limestone), in an oven with a temperature higher than 1100°C. It could be obtained under the form of one or more molten or sintered clinkers able to contain crystallized phases or result from a mixture of various mineral compounds comprising calcium aluminates, obtained in turn through baking or not. The oven to be used can be any oven conventionally used for manufacturing clinkers, such as reverberating furnaces, tunnel furnaces, rotary furnaces or electrical furnaces, either with induction or electric arc.

Preferably, the calcium aluminate cement included in the binder composition of the invention is obtained by sintering and especially by sintering of alumina powder and lime in tunnel or rotary furnaces.

According to an embodiment of the invention, the binder composition of the invention may also comprise other hydraulic binder, such as: Portland cement (b), calcium sulfate (c), lime (d), etc. or mixture thereof.

Preferably and according to the embodiment, the binder composition of the invention may comprise, by weight, relative to the total weight of said binder composition,
- from 1% to 40%, preferably from 3% to 35%, and ideally from 5% to 30% of the calcium aluminate cement (a) as defined above,
- from 0% to 80%, preferably from 15% to 75% and ideally from 20% to 70% of Portland cement (b),
- from 0% to 20%, preferably from 0.5% to 15% and in particular from 1% to 10% of calcium sulfate (c), and
- from 0% to 10%, preferably from 0% to 8% and especially from 0.5% to 5% of lime (d).

Portland cement (b) may especially standardized cement according to the European standard EN197-1 relating to cement composition and may be selected for instance from CEM Portland cement or CEM2 Portland cement or mixture thereof.

Calcium sulfate CaSO4 (c) may be in the form of anhydrite and/or hemihydrate, such as ß-semihydrate or anhydrite II, gypsum, from natural or synthetic origin, or mixtures thereof.

Preferably, the calcium aluminate (a)/calcium sulphate (d) weight ratio ranges from 0.5 to 4, more preferably from 1.5 to 3.

The binder composition comprising the calcium aluminate cement (a) according to the invention allows to obtain, after the addition of granulates and additives, a dry mortar composition.

Therefore, another object of the invention relates to the use of the binder composition as defined above for preparing a dry mortar and especially a self-levelling mortar and/or a self-smoothing mortar.

Another object of the invention relates to a mortar composition comprising, by weight, relative to the total weight of said mortar composition (in its dry form):
- from 10% to 50% of the binder composition as defined above; and
- from 90% to 50% of granulates.

According to the invention, granulates may be selected from fillers, aggregates or mixture thereof.

According to the invention, "fillers" or "fines" are mineral compounds having a particle size equal to or lower than 100 micrometers.

As used herein, "fillers or fines" are typically selected from silica fume, blast furnace slag, steel slag, fly ash, lime fillers, particulate silica, silicas including pyrogenated and precipitated silicas, silicas recovered in rice husks, diatomaceous silicas, calcium carbonates, calcium silicates, barium sulfate, metakaolins, titanium, iron, zinc, chromium, zirconia, magnesium metal oxides, alumina under its various forms (hydrated or not), alumina hollow beads, boron nitride, lithopone, barium metaborate, calcinated, standard or expanded clays, perlite, vermiculite, pumices, rhyolite, chamotte, talc, mica, optionally hollow, glass beads or expanded glass granules, silicate foam grains, silica aerogels, sands, broken gravels, gravels, pebbles, carbonate black, silicon carbide, corundum, rubber granules, wood, straw.

In general, the aggregates according to the invention has preferably a particle size in the range of 100µm to 2 mm and may be selected from sand (such as siliceous sand) or any kind of synthetic or natural aggregates, such as silicates or alumino-silicates that does not dissolve in water.

In particular, the mortar composition of the invention may also comprise, by weight, relative to the total weight of said mortar composition: from 0% to 15%, preferably from 1 % to 8% and ideally from 2% to 5% of additives.

Generally, the above mentioned additives are selected from redispersible polymers, water retaining agents and rheological additives, setting-time controlling additives, such as setting accelerators or setting retarders or mixture thereof.

Especially, the composition of the invention comprises, by weight, 2% or less, preferably, 1% or less of redispersible powder or liquid polymers. Indeed, the composition according to the invention enables to obtain SLU having improved surface properties (polishing resistance, smooth surface) even if the composition comprises low content of redispersible powder or liquid polymers.

As previously mentioned, such polymers are for example polyvinyl alcohols, polyamides, latexes in a liquid form or in a powdered form.

As used herein, a latex is intended to mean an emulsion of one or more polymers obtained through radical polymerization of ethylenically unsaturated monomers selected from styrene, styrene derivatives, ethylene, vinyl acetate, vinyl chloride, vinylidene chloride, vinyl propionate, vinyl n-butyrate, vinyl laurate, vinyl pivalate and vinyl stearate, VEOVA° 9 to 11, (meth)acrylamide, (C₁-C₂₀)alkyl esters of methacrylic acid, (C₂-C₂₀)alkenyl esters of methacrylic acid with alkanols of from 1 to 12 carbon atoms, such as methylester, ethylester, n-butylester, isobutylester, t-butylester and 2-ethylhexylester of acrylic and methacrylic acids, nitriles, acrylonitriles, dienes, such as 1,3-butadiene, isoprene, monomers carrying two vinyl groups, two vinylidene groups or two alkylene groups.

The setting accelerators used in the present invention may be of any type known. Their use enables to adjust the workability of the self-levelling or self-smoothing mortar of the invention. To be mentioned as illustrative examples are sodium aluminate, sodium silicate, potassium aluminate, aluminum sulfate, potassium carbonate, lithium salts such as lithium hydroxide, lithium sulfate and lithium carbonate to be used alone or in combination.

The setting retarders used in the present invention may be of any type known, and to be especially mentioned as illustrative examples are citric acid, tartaric acid, gluconate, and boric acid and salts thereof to be used alone or in combination.

Especially setting-time controlling agents selected from setting accelerators and setting retarders may represent from 0.05% to 15% by weight, preferably from 0.1% to 10% by weight as related to the composition total weight.

Water retaining agents and rheology modifiers may be selected in the family including cellulose ethers, guar ethers, starch ethers, associative polymers, polymers obtained through biofermentation such as xanthan gums, wellan gums.

In order to limit the moisture transfers inside the composition once it is hardened, it is interesting to incorporate a waterproofing agent during the preparation thereof. To be mentioned as illustrative, non-limitative examples of suitable waterproofing agents are:
- silicon oils of the polydimethylsiloxane type which may be functionalized or not with reactive groups of the Si-H, Si(OMe), Si(OEt) type, the aqueous emulsions derived from these oils such as for example described in the U.S. Pat. No. 5,373,079;
- organosilanes such as trialkoxysilanes and silazanes described in the patent US 2,005, 018,217,4; siliconates such as for example potassium methylsiliconate; paraffins, waxes of the stearate and oleate types, vegetable oils and their derivatives such as marketed by the Novance company.

These waterproofing agents will be used depending on their nature, either neat or diluted in a solvent, or dispersed or emulsioned in water.

The rheological additives are conventional components of mortars having the aim of improving the initial mixed mortar rheology. Such theological additives include casein, sulfonated melamine formaldehydes, polyoxyethylenated phosphonates (POE), ethylene polyoxide polycarbonates (PCP) and mixtures thereof. Such additives are commercially available products. As an example, OPTIMA 100(R)and PREMIA 150(R)products, marketed by CHRYSO Corporation as well as MELMENT F10(R), MELFLUX PP100F(R) marketed by SKW Corporation may be mentioned or PERAMIN CONPAC 500 (marketed by KERNEOS).

The rheological additives preferably account for 0.1% to 0.5% of the weight total of the dry mortar. They are often associated with hydrosoluble polymers, having the function of limiting the segregation, such as cellulose ethers, as well as welan gums and polysaccharides.

Generally, the mortar comprises by weight (in its dry form), relative to the total weight of said mortar composition:
- from 15% to 35% of Portland cement;
- from 4% to 12% of calcium aluminate as defined above;
- from 0.5% to 10% of calcium sulfate;
- from 0% to 10% of additives,
- from 55% to 70% of said granulates.

Preferably, the amount of mixing water in percentage in weight based on the total weight of the dry composition of the invention is ranging from 10% to 30%, preferably from 22% to 26%.

Finally, another object of the invention is the use of the binder composition as defined above for formulating a wet mortar according to the invention.

The invention is illustrated and detailed by the following examples. In all such examples, the percentage is expressed in weight based on the total weight of the composition and the amount of mixing water is given in percentage in weight based on the total weight of the dry components of the mortar.

### EXEMPLES

### A) Test Proceedings

### ✔ With standard polishing tool having a given pressure:

To evaluate the polishing properties of the SLU mortar containing the tested calcium aluminate cements, a specific test which is representative of the job site polishing operation has been designed by the Applicant. For this test, a standard polishing tool, trademark MUHE, made of a 180mm rotating disk on which sand paper is placed, is used. The rotating speed is 1500-3000rpm/min. The sand paper grade used here is always P80.

The pressure applied to the surface to be polished is constant thanks to the design of the polishing tool and is therefore independent of the operator. The applied pressure is 500Pa. The surface is polished during 10s, 30s, or 1 min.

A rating to the state of the surface is given after polishing by weighing the amount of product removed during the polishing, after the surface has been vacuum cleaned.

Especially, this test is performed in a temperature and humidity regulated laboratory: 23C°50%RH and comprises the followings steps:
- preparing 1 to 2.5kg of a mortar and blending the raw materials in a plastic bag;
- mixing the mortar in a standard AFNOR mixer, for 4 min, with the required water ratio;
- casting the SLU on a 200x200mm cement board with edges (rubber) to contain the mortar (the thickness of the slab is 3mm and the total casted weight is about 500g);
- storing the slab in the lab for 48hours;
- polishing the sample with a commercial disk polisher (trademark MUHE).
- applying the sand paper once before performing the polishing (used 10 times), the polishing time is 10, 30 or 60 seconds;
- measuring the SLU weight before and after the polishing and reporting the weight removed is reported in grams.

### ✔ Taber test

The Taber test is designed to evaluate the abrasion resistance of a surface it is often sufficient to evaluate the surface properties of self-leveler but it was not sufficient to measure the polishing properties. However, it gave significant results in some cases which are reported here. The Taber test is described in the ASTM standard D4060 (Weight Loss). In this test, two abrasion wheels with reference H-22 rotate over the turning disk made of the sample to test. The weight removed by the wheels form the sample is measured after a given number of rotations. This test is therefore quite different from the polishing test established in this study.

### B) Example 1

### 1- Compositions of tested calcium aluminate cements

For the examples, four compositions of calcium aluminate cements were tested as hydraulic binder for a SLU mortar: one as a comparative example (hereafter "Comp.ex") and three according to the invention (P1, P2 and P3).

Table 1 shows the chemical composition and table 2 below shows the mineralogical composition, of the tested calcium aluminate cements.

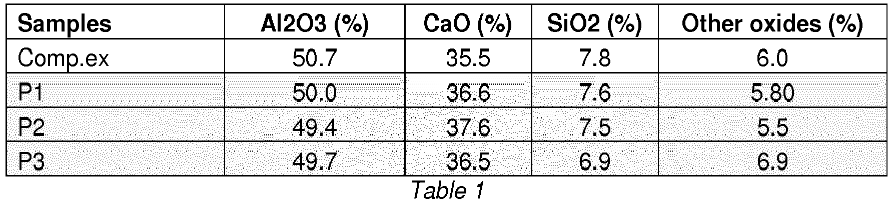

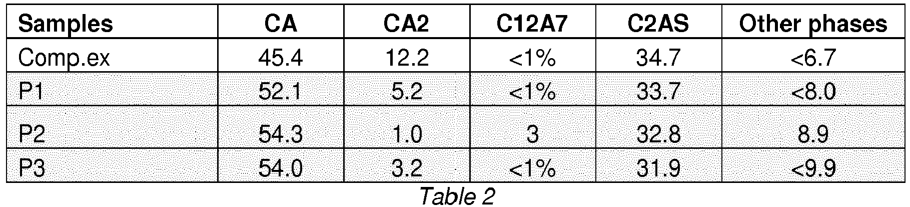

Comp.ex is a current commercial product used as a reference sample. It contains more than 50% of Al₂O₃, but the CA content is quite low (45.4% of CA phase by weight).

All the tested calcium aluminate cements are made by sintering, at about 1400°C, from lime and various bauxites grade. Then, they are milled so as to obtain the appropriate Blaine specific area (BSA).

### 2- Composition of tested mortars

The various above cited cements were tested in a SLU mortar formulation presented in the table 3 below. This formula is a typical average performance SLU, with a rapid hardening (over 10MPa at 24h), a set times smaller than 3 hours. The mineral binder contains a large amount of Portland cement. A fast hardening mix (CAC + anhydrite) is added to provide for strength at short times.

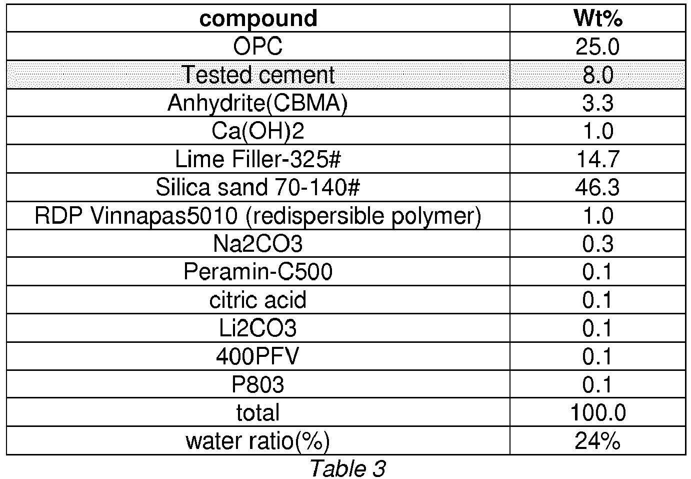

### 3- Results

Table 4 below shows that the calcium aluminate cement P1 and P2 of the composition of the invention enables to obtain a mortar with improved wear resistance, without affecting the other properties (smoothness, rheology, etc.). Especially, the surface of the mortar is able to better withstand the polishing.

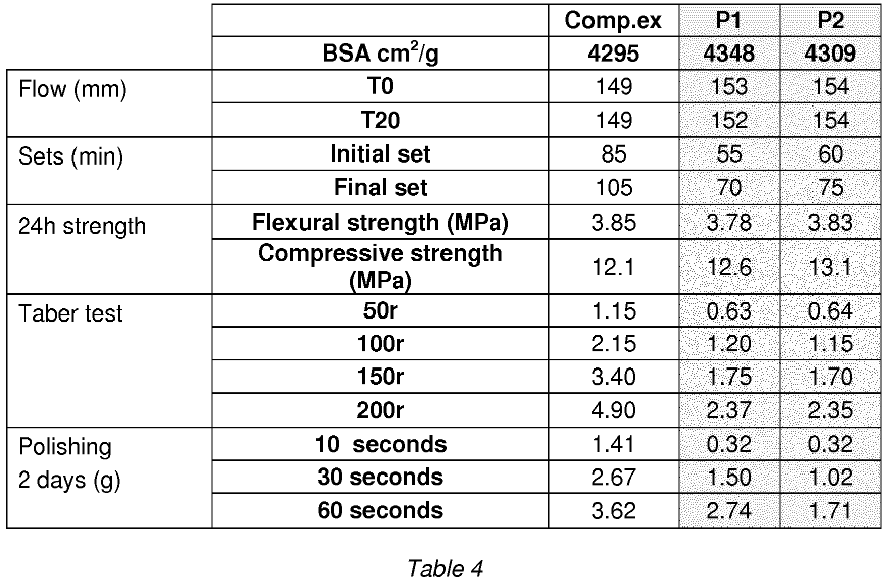

Table 5 also shows that the calcium aluminate cement P3 of the composition of the invention enables to obtain a mortar with improved wear resistance, without affecting the other properties.

**Table 5**

| | | **P3** | **Comp**.**ex** |
|---|---|---|---|
| | **BSA** | **4200cm²**/**kg** | **3800cm²**/**g** |
| **Flow(mm)** | **T0** | 148 | 148 |
| | **T20** | 157 | 152 |
| **Setting time (min)** | **Initial Set** | 50 | 75 |
| | **Final Set** | 65 | 100 |
| **Flexural strength(MPa)** | **24h** | 4.34 | 3.96 |
| **Compressive strength(MPa)** | **24h** | 14.0 | 13.4 |
| **Polishing 2 days (g)** | **10 seconds** | 0.34 | 0.46 |
| | **30 seconds** | 0.81 | 1.15 |

Hence, this example 1 shows that, surprisingly, increasing the amount of CA, which is the main active phase of the cement, and increasing the Blaine can improve the reactivity of the cement and enable to increase the polish resistance, the strength of the mortar this obtained.

### C) Example 2

Another composition of mortar has been tested according to GB/T 28631-2012 "Calcium aluminate agents for dry-mixed mortar" and is as follows (table 6):

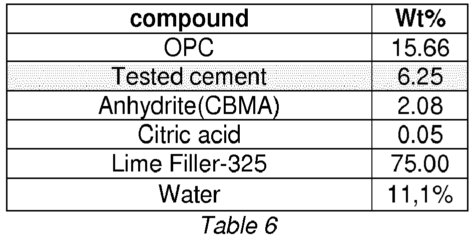

The tested cements are the calcium aluminate P3 according to the invention with a BSA of 4200 cm²/g or of 3800 cm²/g, and one as comparative example: Comp.ex with a BSA of 3800 cm²/g.

As it is shown on figure 1, the two calcium aluminate motars P3 according to the invention enable to obtain a mortar having improved compressive strength in comparison with the mortar obtained with calcium aluminate cement of the comparative example even if this one as a BSA of 3800 cm²/g.

## Claims

1. Binder composition comprising at least (a) one calcium aluminate cement, said calcium aluminate cement comprising by weight relative to its total weight,
- as regards its chemical composition at least: 50% or less of Al₂O₃ and,
- as regards its mineralogical composition at least: 50% or more of CA, said calcium aluminate cement comprising a Blaine Specific Area (BSA) higher than or equal to 3800 cm²/g.

2. Binder composition according to claim 1, wherein said calcium aluminate cement comprises a Blaine specific area (BSA) which is ranging from 4000 to 6000 cm²/g, preferably which is ranging from 4200 to 5000 cm²/g.

3. Binder composition according to claim 1 or 2, wherein said calcium aluminate cement comprises, by weight, relative to its total weight and as regards its chemical composition :
- from 30% to 50%, preferably from 40% to 50% of Al₂O₃;
- from 30% to 45%, preferably from 35% to 40% of CaO;
- from 20% or less, preferably from 15% of less of SiO₂, Fe₂O₃ and/or TiO₂.

4. Binder composition according to any one of the preceding claims, wherein said calcium aluminate cement comprises, by weight, relative to its total weight and as regards its mineralogical composition, at least:
- from 50% to 60% of CA phase;
- from 0% to 15%, preferably from 0% to 11 % of CA2 phase.

5. Binder composition according to any one of the preceding claims, wherein said hydraulic binder comprises Portland cement (b), calcium sulfate (c), lime (d) or a mixture thereof.

6. Binder composition according to claim 5, comprising, by weight, relative to its total weight,
- from 1% to 40%, preferably from 3% to 35%, and ideally from 5% to 30% of the calcium aluminate cement (a) according to claims 1 to 5,
- from 0% to 80%, preferably from 15% to 75% and ideally 20% to 70% of Portland cement (b),
- from 0% to 20%, preferably from 0.5% to 15% and in particular from 1% to 10% of calcium sulfate (c), and
- from 0% to 10%, preferably from 0% to 8% and especially from 0.5% to 5% of lime (d).

7. Mortar composition comprising according to any one of the preceding claims, comprising, by weight, relative to the total weight of said composition:
- from 10% to 50% of the hydraulic binder;
- from 90% to 50% of granulates.

8. Mortar composition according to claim 7, wherein the granulates are selected from fillers having a particle size equal to or lower than 100 µm and aggregates having a particle size in the range of from 100µm to 2 mm, such as sands.

9. Mortar composition according to any one of the preceding claims, comprising by weight, relative to the total weight of said mortar composition : from 0% to 15%, preferably from 1 % to 8% of additives.

10. Mortar composition according to claim 9, wherein said additives are selected from redispersible powder polymers, rheological additives, setting regulating additives or mixture thereof.

11. Mortar composition according to claim 10, wherein said redispersible powder polymers represents, by weight, 1.5% or less relative to the total weight of the composition.

12. Mortar composition according to claim 9 to 11, comprising by weight, relative to the total weight of said mortar composition:
- from 15% to 35% of Portland cement;
- from 4% to 12% of calcium aluminate as defined in claim 1 to 4;
- from 0.5% to 10% of calcium sulfate;
- from 0% to 10% of additives,
- from 55% to 70% of said granulates.

13. Mortar composition according to any one of claims 7 to 12, wherein the amount of mixing water relative to the weight of the composition in its dry form is ranging from 10% to 30%, preferably is ranging from 22% to 26%.

14. Use of the binder composition according to any one of the claims 1 to 6 for preparing a dry mortar and especially a self-levelling mortar and/or a self-smoothing mortar.

15. Use of the binder composition according to any one of the claims 1 to 6 for preparing a wet mortar and especially a wet self-levelling mortar and/or a self-smoothing mortar.
